Europäisches Patentamt

European Patent Office

Office européen des brevets

(11) Publication number: **0 377 737**
**A1**

## EUROPEAN PATENT APPLICATION
### published in accordance with Art. 158(3) EPC

(21) Application number: 88906113.1

(22) Date of filing: 20.07.88

(86) International application number:
**PCT/JP88/00729**

(87) International publication number:
**WO 90/01150 (08.02.90 90/04)**

(51) Int. Cl.⁵: **G01J 3/42, G01J 3/08**

(43) Date of publication of application:
**18.07.90 Bulletin 90/29**

(84) Designated Contracting States:
**DE GB NL**

(71) Applicant: **OTSUKA ELECTRONICS CO., LTD.**
**3-26-3, Shodai-tajika**
**Hirakata-shi Osaka 573(JP)**

(72) Inventor: **ATAGI, Hidehiro**
**20-18-305, Hoshigaoka 1-chome**
**Hirakata-shi Osaka 573(JP)**
Inventor: **SEKIWA, Mitsunao**
**24-14, Kuzuha 1-chome**
**Hirakata-shi Osaka 573(JP)**

(74) Representative: **Lehn, Werner, Dipl.-Ing. et al**
**Hoffmann, Eitle & Partner Patentanwälte**
**Arabellastrasse 4**
**D-8000 München 81(DE)**

(54) **SPECTROPHOTOMETER.**

(57) A spectrophotometer capable of measuring a plurality of dispersed beams selectively with a linear array sensor (7, 18), which consists of a single row of sensor members, by discharging beams selectively from the output terminals of optical fibers (3a-3c, 13a, 13b, 21) by means of beam selecting means (8a-8c, SW1, SW2).

Fig. 1

Fig. 4

Xerox Copy Centre

Specification

SPECTROPHOTOMETER

**Field of the Invention**

The present invention relates to a spectrophotometer of the so-called multiple luminus flux type for detecting the diffracted lights of a plurality of beams irradiated to a diffraction grating.

**Background of the Invention**

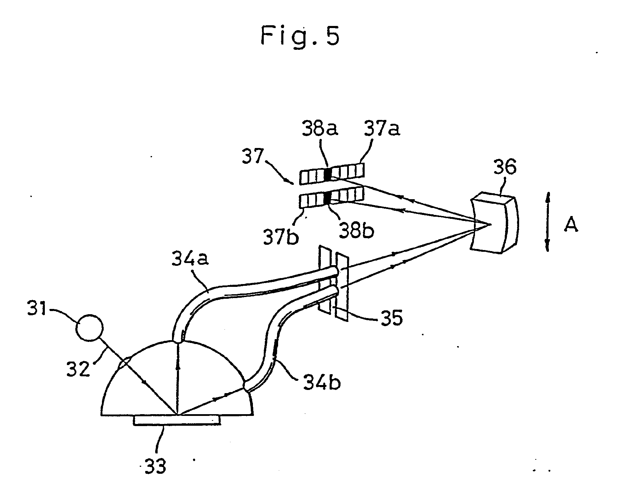

As an example of a spectrophotometer, there has been proposed, for example, a spectrophotometer as shown in Fig. 5 (Japanese patent unexamined publication No. 16324/1982). In this spectrophotometer, light 32 emitted from an irradiation light source 31 is incident upon a sample 33, and two beams reflected in different directions are respectively guided to optical fibers 34a, 34b. The beams are emitted from the output ends of the optical fibers 34a, 34b, and are irradiated to a diffraction grating 36 through a slender slit 35 opened in the grating direction (which is shown by an arrow A in Fig. 5 and which is hereinafter referred to as a vertical direction) of the diffraction grating 36. The beams thus diffracted are detected by a two-row linear array sensor 37.

The output ends of the two optical fibers 34a, 34b are disposed as separated from each other by a predetermined distance. The linear array sensor 37 comprises electrically independent two-row arrays 37a, 37b. After diffracted by the diffraction grating 36, the beams emitted from the optical fibers 34a, 34b are spread as spectra and condensed on the arrays 37a, 37b, respectively. Thus, the diffraction spectra of the respective beams may be obtained on the arrays 37a, 37b, respectively.

According to the spectrophotometer above-mentioned, it is required to form the linear array sensor 37 by two-row arrays 37a, 37b. Further, this spectrophotometer presents the problem that the spectra of the respective beams cannot be accurately compared with each other due to difference in characteristics between the elements (which refer to optical elements serving as array component elements) 38a, 38b corresponding to the same wavelength.

It is an object of the present invention to provide a spectrophotometer in which the spectra of a plurality of beams are acquired on the same array, enabling the spectra to be compared with each other with high precision.

## Disclosure of the Invention

To achieve the object above-mentioned, the present invention provides a spectrophotometer capable of detecting the dispersed lights of a plurality of beams irradiated to a diffraction grating through a slit. The spectrophotometer of the present invention comprises:

a plurality of optical fibers for respectively guiding a plurality of beams, the output ends of the optical fibers being bound together;

beam selecting means for selectively emitting beams from the output ends of the optical fibers;

a diffraction grating for diffracting the beams emitted from the output ends; and

a linear array sensor comprising a one-row array for detecting the beams diffracted by the diffraction grating.

According to the spectrophotometer having the arrangement above-mentioned, the beam selecting means are operated to selectively emit a beam from a single optical fiber output end, and this beam is irradiated to the diffraction grating, so that the diffraction spectrum of this beam alone may be obtained on the array forming the linear array sensor. Thereafter, the beam selecting means are operated to selectively emit a beam from the output end of another optical fiber, and the diffraction spectrum of this beam may be obtained on the same array. Thus, the spectral characteristics of both beams may be precisely comapared with each other without variations of the characteristics of the elements of the linear array sensor put in question.

Each of the beam selecting means may be a chopper which is disposed in the course of each optical fiber and which is capable of intercepting the passage of the beam, or may be means for turning ON/OFF each irradiation light source for irradiating a beam to each optical fiber.

Each of the optical fibers may be a bundle-type fiber unit in which a plurality of unit-optical fibers are bound together, and the output ends of the bundle-type fiber units are bound with the output ends of the respective unit-optical fibers alternately arranged in a mixed and interlacing manner and dispersingly arranged on a rectangular plane surface. The longer sides of the rectangular plane surface may be arranged in the same direction as the grating direction of the diffraction grating. In such an arrangement, the beams may be irradiated, without excessive diffusion, to the diffraction grating from the output ends which are dispersingly arranged on the rectangular plane surface. Accordingly, the amount of the lights irradiated to the diffraction grating may be increased. This improves the detection precision without substantial decrease in wavelength resolution. The length of each of the longer sides of the rectangular plane surface may be equal to the opening width of the slit extending along the grating direction of the diffraction grating.

Brief Description of the Drawings

Figure 1 is a general schematic view of a spectrophotometer in accordance with an embodiment of the present invention;

Figure 2 shows a timing chart of light-transmission and light-interception of choppers;

Figure 3 is a perspective view of the output ends of bundle-type optical fibers;

Figure 4 is a general schematic view of the spectrophotometer using two irradiation light sources in accordance with another embodiment of the present invention; and

Figure 5 is a general schematic view of a conventional spectrophotometer.

## Preferred Embodiments of the Present Invention

The following description will discuss in detail the present invention with reference to the attached drawings.

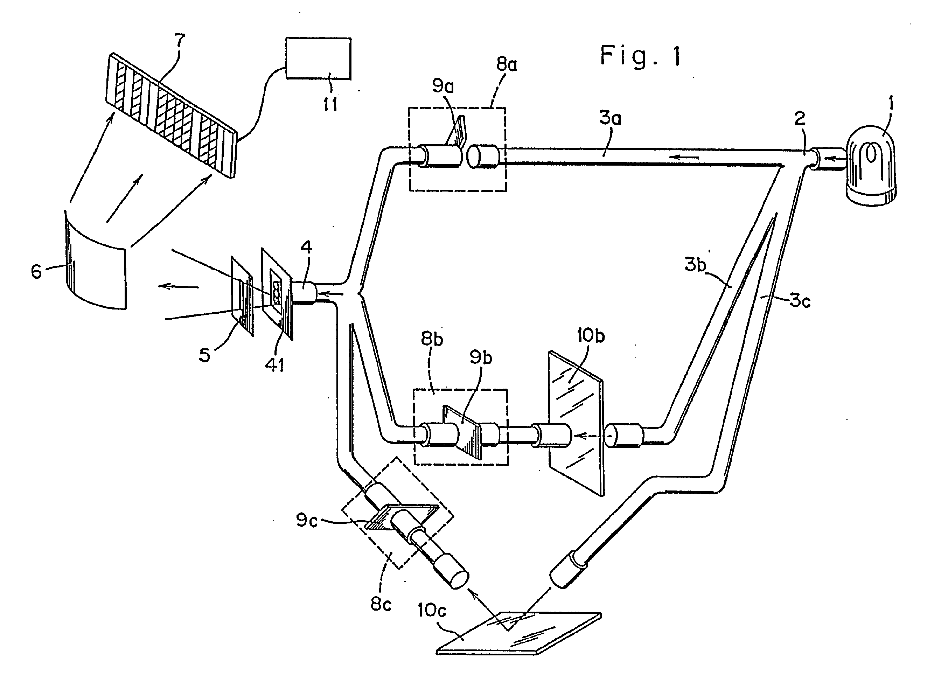

In Fig. 1, the spectrophotometer of the present invention includes: an irradiation light source 1; a light branching device 2 for receiving and branching the beam from the irradiation light source 1 into three different directions; a reference optical fiber 3a, and sample optical fibers 3b, 3c connected to the output side of the light branching device 2; a binding unit 4 for binding the output ends of the optical fibers 3a, 3b, 3c as vertically arranged in one row (the output end of the binding unit 4 is particularly referred to as the output end portion 41); a vertically slender slit 5 through which the beam from the output end portion 41 passes; a concave diffraction grating 6 to which the beam having passed through the slit 5 is irradiated; a linear array sensor 7 comprising a one-row photodiode array for detecting the light reflected from the concave diffraction grating 6; and a signal processing unit 11 for processing a detection signal of the linear array sensor 7.

A chopper 8a functioning as beam selecting means is disposed in the course of the reference optical fiber 3a. A light-permeable sample 10b and a chopper 8b functioning as beam selecting means are disposed, in series, in the course of the sample optical fiber 3b. A reflective sample 10c and a chopper 8c functioning as beam selecting means are disposed in the course of the sample optical fiber 3c.

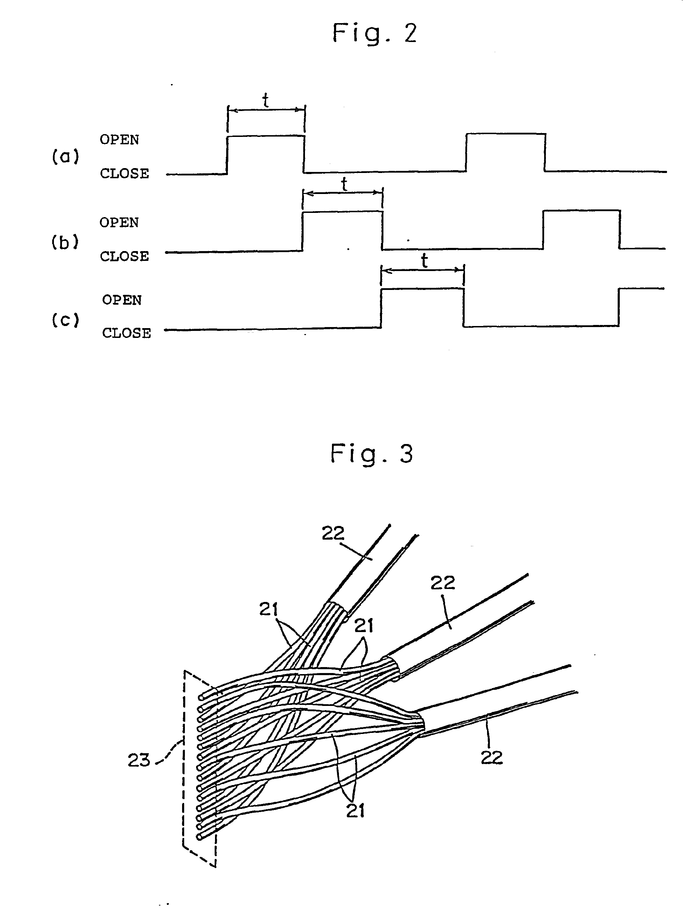

The choppers 8a, 8b, 8c respectively have light intercepting plates 9a, 9b, 9c adapted to be so rotated by rotating means (not shown) as to intercept the light guided to the reference optical fiber 3a (hereinafter referred to as monitor light), and the lights guided to the sample optical fibers 3b, 3c (hereinafter referred to as sample lights). The choppers 8a, 8b, 8c are adapted to repeatedly open and close the optical paths at predetermined cycles as shown in Fig. 2, in which each optical path open time is shown by $t$. The chopper 8b opeation timing is delayed by the time $t$ from the chopper 8a operation timing ((b) in Fig. 2), while the chopper 8c operation timing is delayed by the time $t$ from the chopper 8b operation timing ((c) in Fig. 2). Accordingly, only one beam guided by any of the optical fibers 3a, 3b, 3c is irradiated to the diffraction grating 6 through the slit 5 at all times, and two or more beams guided by two or more optical fibers are never simultaneously irradiated to the diffraction grating 6.

The signal processing unit 11 is adapted to synchronize the optical path open timings of the choppers 8a, 8b, 8c, enabling a sample light detection signal and a monitor light detection signal from the linear array sensor 7 to be separated from each other.

According to the spectrophotometer having the arrangement above-mentioned, the beam emitted from the irradiation light source 1 enters the light branching device 2, which guides the beam to the optical fibers 3a, 3b, 3c. The beam passing through the optical fiber 3b is first absorbed according to the characteristics of the absorption spectrum of the light-permeable sample 10b, and then reaches the chopper 8b. The beam passing through the optical fiber 3c is first reflected according to the characteristics of the reflection spectrum of the reflective sample 10c, and then reaches the chopper 8c. The beam passing through the reference optical fiber 3a reaches, as it is, the chopper 8a. As mentioned earlier, the chopper 8a, 8b, 8c may periodically select the beams passing through the optical fibers 3a, 3b, 3c. Accordingly, the beam guided by one of the optical fibers 3a, 3b, 3c is always irradiated from the output end portion 41. The beam thus irradiated, then passes through the slit 5 and is irradiated, in the form of a slender ray of light, to the concave diffraction grating 6. The beam reflected from the concave diffraction grating 6 is imaged on the light receiving surface of the linear array sensor 7. Accordingly, a detection signal according to the spectral intensity may be obtained by the elements forming the linear array sensor 7. In the signal processing unit 11, the detection signal of the sample light may be separated from the detection signal of the monitor light. Accordingly, the spectral characteristics of the sample light and the monitor light may be acquired and compared with each other.

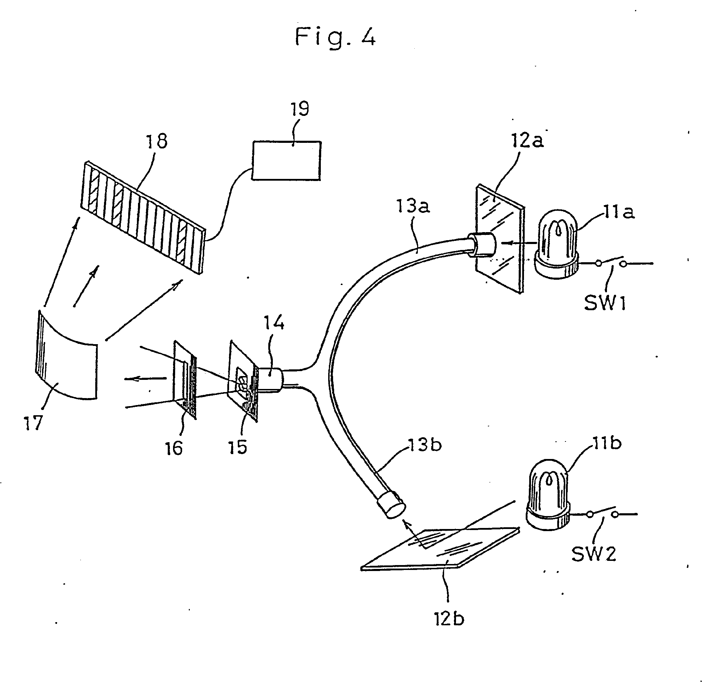

Fig. 4 shows the spectrophotometer in accordance with another embodiment of the present invention.

The spectrophotometer in Fig. 4 includes: two irradiation light sources 11a, 11b; two optical fibers 13a, 13b for introducing the lights respectively emitted from these irradiation light sources 11a, 11b through a light-permeable sample 12a and a reflective sample 12b; a binding unit 14 for binding the output ends 15 of the optical fibers 13a, 13b as vertically arranged in one row; a vertically slender slit 16 through which the beam from any of the output ends 15 passes; a concave diffraction grating 17 to which the beam having passed through the slit 16 is irradiated;

a linear array sensor 18 comprising a one-row photodiode array for detecting the light reflected from the concave diffraction grating 17; and a signal processing unit 19 for processing a detection signal of the linear array sensor 18.

The irradiation light sources 11a, 11b respectively have ON/OFF switches SW1, SW2 functioning as beam selecting means, and are adapted to be alternately turned ON/OFF. The light-permeable sample 12a is adapted to be rotated by rotating means (not shown). By rotating the light-permeable sample 12a, the light emitted from the irradiation light source 11a may be guided directly to the optical fiber 13a without passing through the light-permeable samaple 12a. Thus, the beam directly guided to the optical fiber 13a may be used as a monitor light.

According to the spectrophotometer above-mentioned, while the irradiation light source 11a is turned ON and the irradiation light source 11b is turned OFF, the beam emitted from the irradiation light source 11a is first absorbed according to the characteristics of the absorption spectrum of the light-permeable sample 12a and reaches, as guided by the optical fiber 13a, the binding unit 14. While the irradiation light source 11a is turned OFF and the

irradiation light source 11b is turned ON, the beam emitted from the irradiation light source 11b is first reflected according to the characteristics of the reflection spectrum of the reflective sample 12b and reaches, as guided by the optical fiber 13b, the output ends 15. Either the beam passing through the light-permeable sample 12a or the beam reflected from the reflective sample 12b may be irradiated from the output ends 15, according to the alternate ON/OFF condition of the irradiation light sources 11a, 11b. The beam thus irradiated passes through the slit 16 and is irradiated, in the form of a slender ray of light, to the concave diffraction grating 17. The beam as reflected from the concave diffraction grating 17 is imaged on the light receiving surface of the linear array sensor 18. Accordingly, a detection signal according to the spectral intensity may be acquired by the elements forming the linear array sensor 18. In the signal processing unit 19, the spectral characteristics may be acquired in synchronism with the alternate ON/OFF operations of the irradiation light sources 11a, 11b, and compared with each other. Alternatively, the monitor light may pass through the optical fiber 13a with the light-permeable sample 12a removed, and the spectral characteristics of this monitor light may be compared with the spectral characteristics of the beam reflected from the reflective sample 12b. Thus, precise comparison measurement may be made without variations of the characteristics of the elements of the linear array sensor put in question.

The present invention should not be limited to the embodiments above-mentioned. For example, the number of the sample optical fibers may be increased or decreased. Alternatively, the beam selecting means may be formed by a mechanical arrangement in which the abutting ends of the opposite optical fibers are positionally shifted from each other or separated away from each other, instead of the arrangement in which the beams are intercepted by the light intercepting plates. Instead of such a mechanical arrangement, optical elements such as optical switches, optical attenuators or the like may be inserted in the course of the optical fibers. Further, the present invention may be arranged such that there is not carried out measurement of a plurality of samples as switched at a high speed, but such that a suitable one chopper is opened only for a predetermined period of time required for measurement in which samples are individually measured.

Alternatively, instead of the optical fibers each having a single optical waveguide, there may be used bundle-type optical fiber units as shown in Fig. 3. In Fig. 3, a plurality of unit-optical fibers 21 are bundled together in the form of a bundle-type optical fiber unit 22, and the respective unit-optical fibers 21 are alternately arranged in a mixing and interlacing manner in a vertical direction in one or more rows at an output end portion 23 having a rectangular section. According to such an arrangement, there may be obtained beams excellent in focusing ability. This enables the light to be utilized without loss. Further, the light may be uniformly irradiated to the respective elements of the linear array sensor 18.

What is Claimed is:

1. A spectrophotometer for detecting the dispersed lights of a plurality of beams irradiated to a diffraction grating through a slit, comprising:

a plurality of optical fibers for respectively guiding a plurality of beams, the output ends of said optical fibers being bound together;

beam selecting means for selectively emitting the beams from said output ends of said optical fibers;

a diffraction grating for diffracting said beams emitted from said output ends; and

a linear array sensor comprising a one-row array for detecting the beams diffracted by said diffraction grating.

2. A spectrophotometer as set forth in Claim 1, wherein the beam selecting means comprises choppers disposed in the course of each optical fiber, said choppers being capable of intercepting the passage of the beam.

3. A spectrophotometer as set forth in Claim 1, wherein the beam selecting means is so arranged as to selectively turn ON irradiation light sources for irradiating beams to the optical fibers

4. A spectrophotometer as set forth in Claim 1, wherein each of the optical fibers is a bundle-type fiber in which a plurality of unit-optical fibers are bound together, and the output ends of the bundle-type fibers are bound with the output ends of the unit-optical fibers alternately arranged in a mixed and interlacing manner and dispersingly arranged on a rectangular plane surface, the longer side of said rectangular plane surface being arranged in the same direction as the grating direction of the diffraction grating.

5. A spectrophotometer as set forth in Claim 4, wherein the length of the longer side of the rectangular plane surface is equal to the opening width of the slit extending along the grating direction of the diffraction grating.

Fig. 1

# Fig. 2

(a)

OPEN

CLOSE

(b)

OPEN

CLOSE

(c)

OPEN

CLOSE

# Fig. 3

# Fig. 4

Fig.5

# INTERNATIONAL SEARCH REPORT

International Application No   PCT/JP88/00729

## I. CLASSIFICATION OF SUBJECT MATTER (if several classification symbols apply, Indicate all) 6

According to International Patent Classification (IPC) or to both National Classification and IPC

Int.Cl$^4$    G01J3/42, 3/08

## II. FIELDS SEARCHED

### Minimum Documentation Searched 7

| Classification System | Classification Symbols |
|---|---|
| IPC | G01J3/08, 3/42, 3/50, 3/51 |

### Documentation Searched other than Minimum Documentation to the Extent that such Documents are Included in the Fields Searched 8

Jitsuyo Shinan Koho       1954 - 1988

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| Y | JP, Y2, 57-30593 (Hitachi, Ltd.) 5 July 1982 (05. 07. 82) Fig. 4 (Family: none) | 1-5 |
| Y | JP, B2, 61-28925 (International Business Machines Corp.) 3 July 1986 (03. 07. 86) Column 1, lines 13 to 20 | 1-5 |
| Y | JP, Y2, 59-4258 (Omron Tateisi Electronics Co.) 7 February 1984 (07. 02. 84) Column 1, lines 32 to 34, Figs. 2 to 3 (Family: none) | 1-5 |
| Y | JP, B2, 56-16378 (International Business Machines Corp.) 16 April 1981 (16. 04. 81) Fig. 1 & US, A, 3999062 & DE, A1, 2642170 & FR, B1, 2326693 | 1-5 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| September 28, 1988 (28. 09. 88) | October 11, 1988 (11. 10. 88) |
| International Searching Authority | Signature of Authorized Officer |
| Japanese Patent Office | |

Form PCT/ISA/210 (second sheet) (January 1985)